# EUROPEAN PATENT APPLICATION

(11) **EP 1 580 742 A2**
(43) Date of publication of application: **28.09.2005**
(21) Application number: 05251825.5
(22) Date of filing: 23.03.2005
(51) Int. Cl.: G11B 7/26

(54) **Method and device for fabricating optical recording medium**

(30) Priority: 23.03.2004 JP 2004084750; 13.10.2004 JP 2004298728
(71) Applicant: Ricoh Company, Ltd., Tokyo 143-8555 (JP)
(72) Inventor: Wakabayashi, Yukihiro, Kanagawa (JP); Nakamura, Yuki, Tokyo (JP); Koga, Noboru, Tokyo (JP); Mikami, Tatsuo, Kanagawa (JP)
(74) Representative: Mounteney, Simon James

(57) **Abstract**

A method for producing a one-side two-layer optical recording medium that is capable of increasing production yield without modifying existing production equipment. A first disk substrate is formed on a first substrate through steps of pigment coating and sputtering, and a second disk substrate is formed on a second substrate through steps of first sputtering, pigment coating, and second sputtering. The first disk substrate and second disk substrate are bonded with the first substrate and the second substrate being on outer sides. Then, online quality examination is conducted on the obtained one-side two-layer optical recording medium.

## Description

### BACKGROUND OF THE INVENTION

### 1. Field of the Invention

The present invention relates to a method and a device of producing an optical recording medium including a first recording layer and a second recording layer and capable of recording and reproduction by incidence and reflection of a light beam on and from one side of the optical recording medium.

### 2. Description of the Related Art

In recent years, it has been published that a two-layer DVD-R is under development, which is a write-once DVD medium including a two-layer stacked structure, and is capable of recording and reproduction from one side thereof. For example, such a two-layer DVD-R is disclosed by H. Matsumura in proceeding of the conference "Toward Further Advances of Red laser Recording DVD", February, 27, 2004, p. 9, organized by Japan Recording-Media Industries Association.

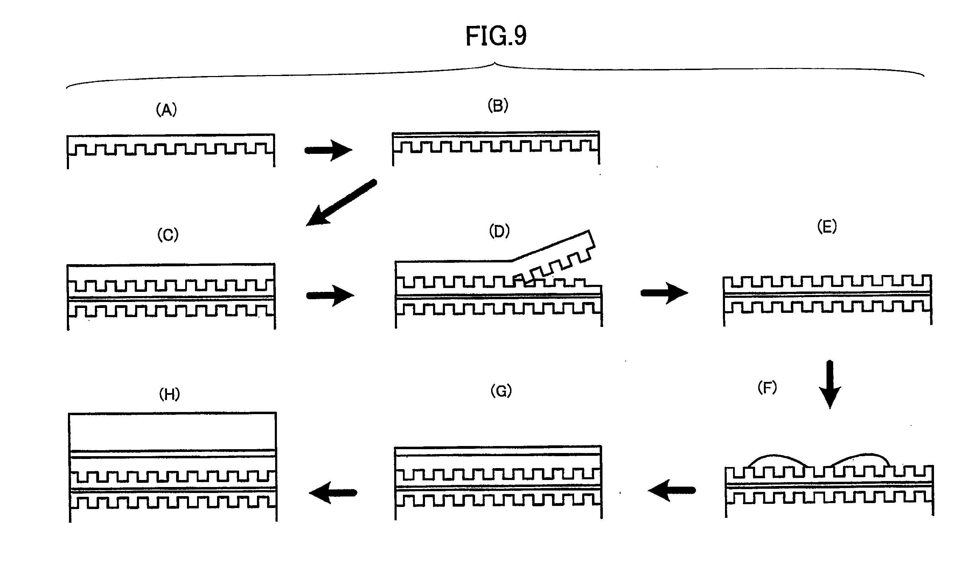

FIG. 9A through 9H are cross-sectional views illustrating a method of producing the two-layer DVD-R in the related art.

First, in steps shown in FIG. 9A and FIG. 9B, a substrate is coated with a first pigment (pigment coating), and the thus formed layer is called an "L0 recording layer substrate".

Next, in step shown in FIG. 9C, a semi-transparent reflection layer is deposited by sputtering, and an intermediate layer and grooves are formed with a soft stamper.

Then, in step shown in FIG. 9D, the soft stamper is removed.

In steps shown in FIG. 9E and FIG. 9F, a coating of a second pigment is applied, and the thus formed layer is called an "L1 recording layer substrate".

Next, in step shown in FIG. 9G, a reflection layer is deposited by sputtering, and a recording disk is formed.

In step shown in FIG. 9H, a dummy substrate (cover) is provided, and a two-layer-stacked recording disk is completed.

However, the above method requires a device for forming the intermediate layer and grooves in the soft stamper, and a device for removing the soft stamper, and it is impossible to use the existing equipment to fabricate the two-layer-stacked recording disk in this method. In addition, because it is needed to modify the existing equipment or to invest to purchase new equipment, cost of fabrication increases. Further, due to damage to the soft stamper when removing the soft stamper, the yield of fabrication is low.

### SUMMARY OF THE INVENTION

Accordingly, it is a general object of the present invention to solve one or more problems of the related art.

A specific object of the present invention is to provide a method and a device for producing a one-side two-layer optical recording medium allowing an increase of yield without modifying existing production equipment.

According to a first aspect of the present invention, there is provided a method of producing an optical recording medium that includes a first recording layer and a second recording layer and is capable of recording and reproduction by incidence and reflection of a light beam from one side of the optical recording medium, said method comprising the steps of forming the first recording layer on a first substrate by performing pigment coating and sputtering sequentially; forming the second recording layer on a second substrate by performing a first sputtering, pigment coating, and a second sputtering sequentially; and bonding the first recording layer and the second recording layer with the first substrate and the second substrate being on outer sides.

According to the present invention, a one-side two-layer optical recording medium is formed by bonding the first recording layer and the second recording layer with the first substrate and the second substrate being on outer sides. Because the first recording layer and the second recording layer are not stacked, as in the related art, it is not necessary to form an intermediate layer and grooves with a soft stamper.

As an embodiment, in the step of forming the first recording layer, a first reflection layer of the optical recording medium is formed by sputtering; and in the step of forming the second recording layer, a second reflection layer of the optical recording medium is formed by the first sputtering, and an inorganic protection layer of the optical recording medium is formed by the second sputtering.

As an embodiment, in the step of forming the first recording layer, annealing is performed after said pigment coating; and in the step of forming the second recording layer, annealing is performed after said pigment coating.

As an embodiment, in the step of forming the first recording layer, edge rinse is performed after said sputtering; and in the step of forming the second recording layer, edge rinse is performed after the second sputtering. In the embodiment, a protection layer is formed after said edge rinse in at least one of the step of forming the first recording layer and the step of forming the second recording layer.

As an embodiment, examination is performed after the step of forming the first recording layer and the step of forming the second recording layer.

According to the present invention, because edge rinse is performed after said sputtering in the step of forming the first recording layer, and after the second sputtering in the step of forming the second recording layer, further, a protection layer is formed after the edge rinse in at least one of the step of forming the first recording layer and the step of forming the second recording layer, it is possible to prevent corrosion or cracks, for example, in the reflection layer and the inorganic protection layer before bonding the first recording layer and the second recording layer.

According to a second aspect of the present invention, there is provided a device of producing an optical recording medium that includes a first recording layer and a second recording layer and is capable of recording and reproduction by incidence and reflection of a light beam from one side of the optical recording medium, said device comprising a first production line configured to form the first recording layer on a first substrate by performing pigment coating and sputtering sequentially; a second production line configured to form the second recording layer on a second substrate by performing a first sputtering, pigment coating, and a second sputtering sequentially; and a third production line configured to bond the first recording layer and the second recording layer with the first substrate and the second substrate being on outer sides.

As an embodiment, the first production line forms a first reflection layer of the optical recording medium by said sputtering; and the second production line forms the second reflection layer of the optical recording medium by the first sputtering, and forms an inorganic protection layer of the optical recording medium by said second sputtering.

As an embodiment, the device further includes an annealing device to perform annealing after said pigment coating when forming the first recording layer and the second recording layer.

As an embodiment, the device further includes an edge rinse device to perform edge rinse after said sputtering when forming the first recording layer, and performs edge rinse after the second sputtering when forming the second recording layer. In the embodiment, the device further includes a protection layer formation device to form a protection layer after said edge rinse when forming at least one of the first recording layer and the second recording layer.

As an embodiment, the device further includes an examination device to examine the first recording layer and the second recording layer.

These and other objects, features, and advantages of the present invention will become more apparent from the following detailed description of preferred embodiments given with reference to the accompanying drawings.

### BRIEF DESCRIPTION OF THE DRAWINGS

FIG. 1 is a cross-sectional view schematically illustrating a one-side two-layer optical recording medium produced by a production method according to a first embodiment of the present invention;
FIG. 2A and FIG. 2B are cross-sectional views schematically illustrating configurations of the second disk substrate L1 and the first disk substrate L0, respectively, of the one-side two-layer optical recording medium in FIG. 1;
FIG. 3 is a flow chart illustrating a method of producing the one-side two-layer optical recording medium in FIG. 1, according to the first embodiment of the present invention;
FIG. 4 is a block diagram schematically illustrating an example of a device for producing a one-side two-layer optical recording medium according to the present embodiment of the present invention;
FIG. 5 is a block diagram schematically illustrating another example of the device for producing a one-side two-layer optical recording medium according to the present embodiment of the present invention;
FIG. 6 is a cross-sectional view schematically illustrating a one-side two-layer optical recording medium produced by a production method according to a second embodiment of the present invention;
FIG. 7A and FIG. 7B are cross-sectional views schematically illustrating configurations of the second disk substrate L1 and the first disk substrate L0, respectively, of the one-side two-layer optical recording medium in FIG. 6;
FIG. 8 is a flow chart illustrating a method of producing the one-side two-layer optical recording medium in FIG. 6, according to the second embodiment of the present invention; and
FIG. 9A through 9H are cross-sectional views illustrating a method of producing the two-layer DVD-R in the related art.

### DESCRIPTION OF THE PREFERRED EMBODIMENTS

Below, preferred embodiments of the present invention are explained with reference to the accompanying drawings.

### First Embodiment

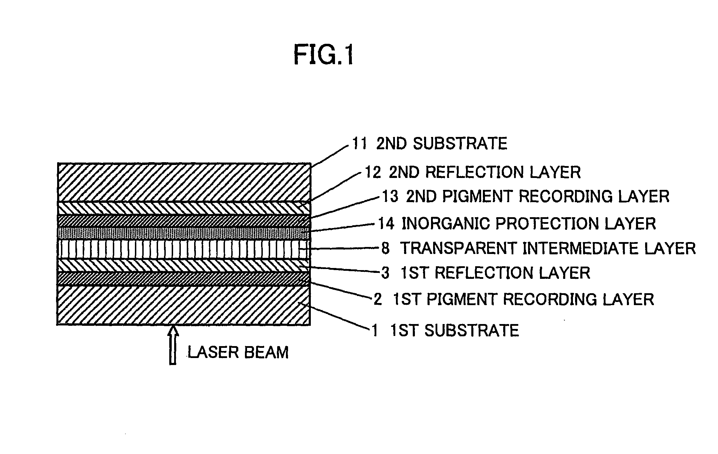

FIG. 1 is a cross-sectional view schematically illustrating a one-side two-layer optical recording medium produced by a production method according to a first embodiment of the present invention.

The optical recording medium illustrated in FIG. 1 includes a first substrate 1, a first pigment recording layer 2, a first reflection layer 3, a second substrate 11, a second reflection layer 12, a second pigment recording layer 13, an inorganic protection layer 14, and a transparent intermediate layer 8.

The first substrate 1, the first pigment recording layer 2, the first reflection layer 3, and the transparent intermediate layer 8 constitute a first disk substrate L0, and the second substrate 11, the second reflection layer 12, the second pigment recording layer 13, the inorganic protection layer 14, and the transparent intermediate layer 8 constitute a second disk substrate L1.

An incident laser beam enters the optical recording medium and a reflected laser beam goes out of the optical recording medium from the side of the first disk substrate L0 for recording and reproduction.

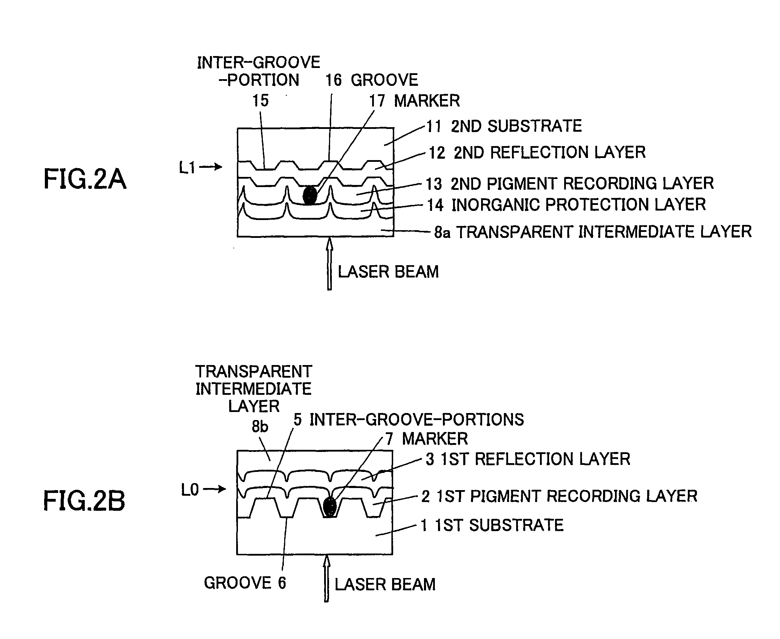

FIG. 2A and FIG. 2B are cross-sectional views schematically illustrating configurations of the second disk substrate L1 and the first disk substrate L0, respectively, of the one-side two-layer optical recording medium in FIG. 1.

The transparent intermediate layer 8 is shown in both FIG. 2A and FIG. 2B, being indicated by 8a and 8b, respectively.

In FIG. 2A, the second disk substrate L1 further includes inter-groove-portions 15, substrate grooves 16, and a marker 17 in the second pigment recording layer 13.

In FIG. 2B, the first disk substrate L0 further includes inter-groove-portions 5, substrate grooves 6, and a marker 7 in the first pigment recording layer 2.

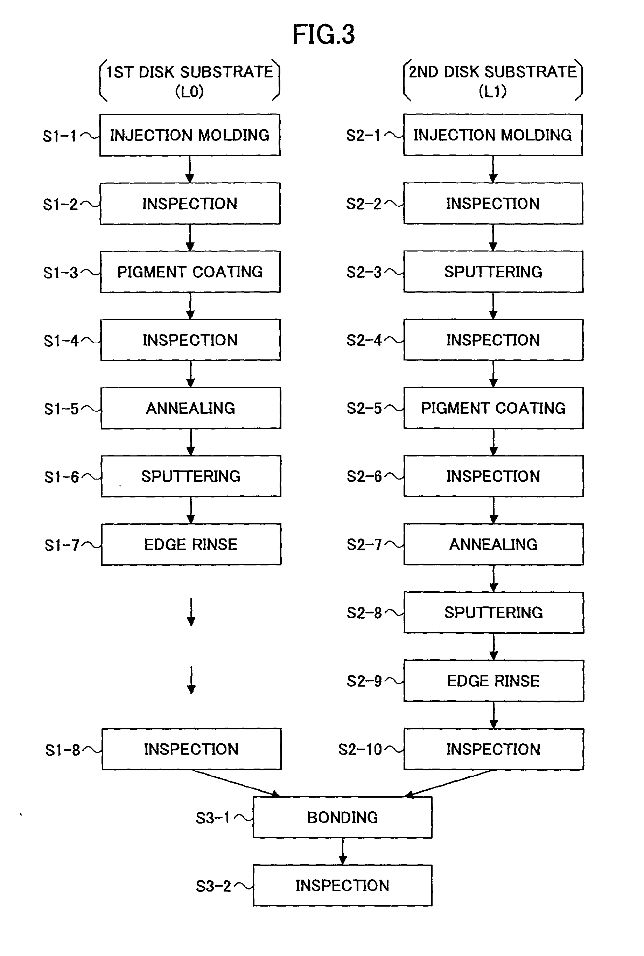

FIG. 3 is a flow chart illustrating a method of producing the one-side two-layer optical recording medium in FIG. 1, according to the first embodiment of the present invention, in which steps 1-1 through 1-8 illustrates fabrication of the first disk substrate L0, and steps 2-1 through 2-10 illustrates fabrication of the second disk substrate L1.

First, fabrication of the first disk substrate L0 is explained.

In step S1-1, the first substrate 1 having unevenness is formed by injection molding from a stamper, which has the corresponding unevenness. For example, the first substrate 1 is formed from a transparent material, and preferably, the first substrate 1 is formed from materials superior in optical properties, such as a small complex refractive index and low hydroscopicity, and carbonate is preferable from the view of formability, cost, shape stability, and so on. For example, thickness of the first substrate 1 is in the range from 560 - 600 µm, and it is desirable that the distribution of the substrate thickness be as narrow as possible in the in-plane direction.

In step S1-2, the obtained first substrate 1 is inspected with an online inspection device with respect to mechanical characteristics, optical characteristics, and shape (substrate thickness) characteristics. Certainly, this inspection can also be made offline.

In step S1-3, after the inspection, a coating of pigment is applied on the first substrate 1. In the first embodiment, considering productivity and production cost, the existing spincoat method is used for applying the pigment. By applying the pigment, the first pigment recording layer 2 is formed on the first substrate 1. It is desirable that the distribution of the thickness of the pigment film be as narrow as possible in the in-plane direction.

In step S1-4, after pigment coating, online defect inspection and film thickness inspection are made on the substrate structure under fabrication with an online inspection device. Certainly, this inspection can be performed offline.

In step S1-5, annealing is performed on the substrate structure under fabrication.

In step S1-6, a semi-transparent reflection layer acting as the first reflection layer 3 is deposited by sputtering.

In step S1-7, because the pigment recording medium adheres to the edge of the first disk substrate L0 under fabrication, the edge of the first disk substrate L0 under fabrication is rinsed by spincoat.

In step S1-8, after rinsing the edge, online quality examination is made on individual first disk substrate L0 with the online inspection device, and fabrication of the first disk substrate L0 is completed.

Next, fabrication of the second substrate L1 is explained.

In step S2-1, the second substrate 11 having unevenness is formed by injection molding from the stamper, which has the corresponding unevenness. The second substrate 11 is not required to be transparent, and it is not required that the second substrate 11 be formed from materials superior in optical characteristics and substrate thickness characteristics. Meanwhile, considering the relation with the first substrate 1, it is preferable that the second substrate 11 have rigidity and hydroscopicity matching with those of the first substrate 1, and similarly, carbonate is preferable from the point of view of formability, cost, shape stability, and so on.

In step S2-2, the obtained second substrate 11 is inspected with an online inspection device with respect to mechanical characteristics, and others. This inspection can also be made offline.

In step S2-3, the second reflection layer 12 is deposited by sputtering.

In step S2-4, after sputtering, online defect inspection and film thickness inspection are made on the substrate structure under fabrication with an online inspection device. Certainly, this inspection can be performed offline.

In step S2-5, after the inspection, a coating of pigment is applied on the second substrate 11 by spincoat, thereby forming the second pigment recording layer 13 on the second substrate 11.

In step S2-6, after pigment coating, online defect inspection and film thickness inspection are made on the substrate structure under fabrication with an online inspection device. Certainly, this inspection can be performed offline.

In step S2-7, annealing is performed on the substrate structure under fabrication.

In step S2-8, the inorganic protection layer 14 is deposited by sputtering.

In step S2-9, because the pigment recording medium adheres to the edge of the second disk substrate L1 under fabrication, the edge of the second disk substrate L1 under fabrication is rinsed by spincoat.

In step S2-10, after rinsing the edge, online quality examination of individual second disk substrate L1 is made with the online inspection device, and fabrication of the second disk substrate L1 is completed.

In step S3-1, the first disk substrate L0 and the second disk substrate L1 are bonded with the first substrate 1 and the second substrate 11 being on outer sides, respectively. When the first disk substrate L0 and the second disk substrate L1 are bonded, the transparent intermediate layer 8 (8a, 8b) is obtained.

In step S3-2, after bonding, online quality examination is made on the obtained one-side two-layer optical recording medium with the online inspection device, and fabrication of the one-side two-layer optical recording medium is completed.

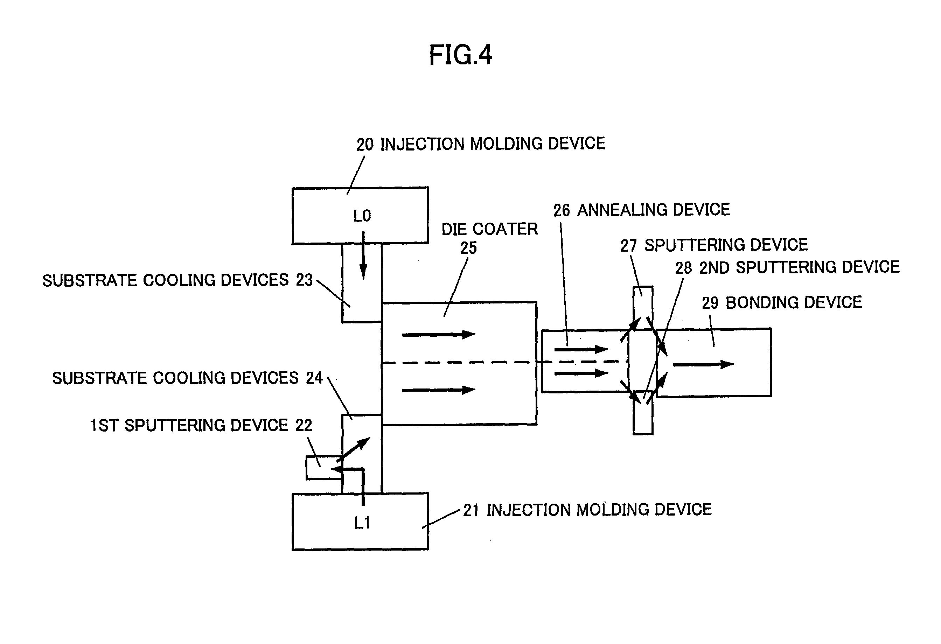

FIG. 4 is a block diagram schematically illustrating an example of a device for producing a one-side two-layer optical recording medium according to the present embodiment of the present invention.

In the present example, a part of a production line for fabricating the first disk substrate L0 and a part of a production line for fabricating the second disk substrate L1 are merged.

Note that the inspection device is not illustrated in FIG. 4.

The device in FIG. 4 includes an injection molding device 20 for use of forming the first disk substrate L0, an injection molding device 21 for use of forming the second disk substrate L1, a first sputtering device 22 for use of forming the second disk substrate L1, cooling devices 23, 24 for use of forming the first disk substrate L0 and the second disk substrate L1, a die coater 25 for use of forming the first disk substrate L0 and the second disk substrate L1, an annealing device 26 for use of forming the first disk substrate L0 and the second disk substrate L1, a sputtering device 27 for use of forming the first disk substrate L0, a second sputtering device 28 for use of forming the second disk substrate L1, and a bonding device 29 for bonding the first disk substrate L0 and the second disk substrate L1 with the first substrate and the second substrate being on outer sides.

According to this example, the production line for fabricating the first disk substrate L0 and the production line for fabricating the second disk substrate L1 are merged at the die coater 25 and the annealing device 26. Due to this, the production line can be made short.

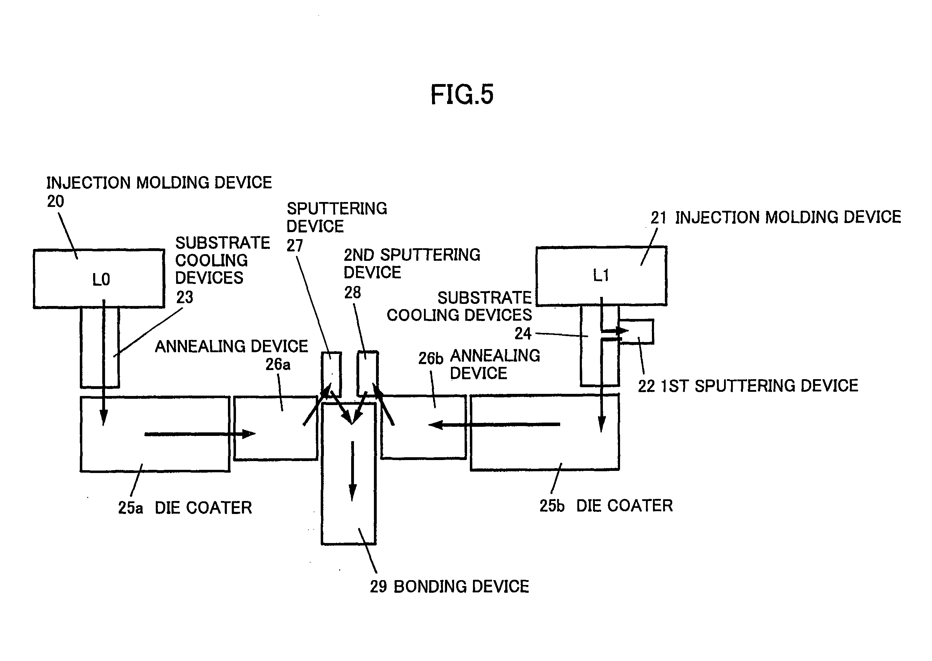

FIG. 5 is a block diagram schematically illustrating another example of the device for producing a one-side two-layer optical recording medium according to the present embodiment of the present invention.

The device in FIG. 5 is different from the device in FIG. 5 in that the production line for the first disk substrate L0 and the production line for the second disk substrate L1 are completely independent, there are two die coaters 25a and 25b, and two annealing devices 26a and 26b. The die coater 25a and the annealing device 26a are for use of the first disk substrate L0, and the die coater 25b and the annealing device 26b are for use of the second disk substrate L1.

According to this example, it is not necessary to build special die coater 25 and the annealing device 26 to have the production lines partially merged, as in the example in FIG. 4, and the existing common devices can be used.

### Second Embodiment

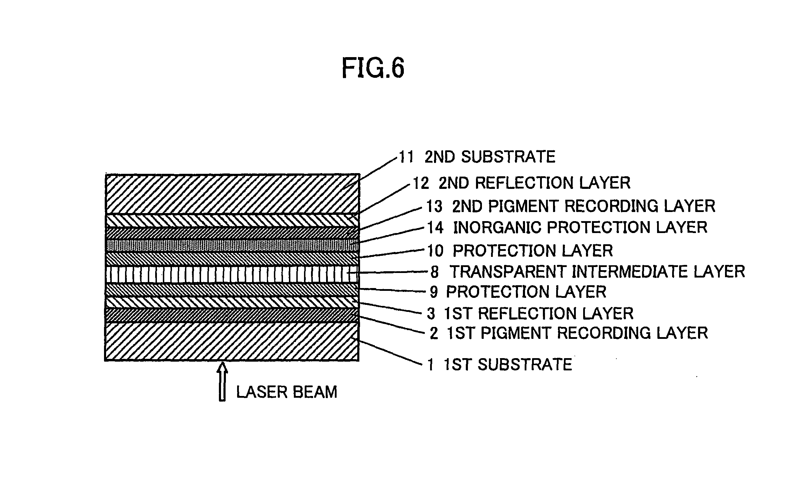

FIG. 6 is a cross-sectional view schematically illustrating a one-side two-layer optical recording medium produced by a production method according to a second embodiment of the present invention.

In this embodiment, the same reference numbers are assigned to the same elements as those described in the previous embodiments.

The optical recording medium illustrated in FIG. 6 includes a first substrate 1, a first pigment recording layer 2, a first reflection layer 3, a second substrate 11, a second reflection layer 12, a second pigment recording layer 13, an inorganic protection layer 14, a transparent intermediate layer 8, and protection layers 9, 10.

The first substrate 1, the first pigment recording layer 2, the first reflection layer 3, the transparent intermediate layer 8, and the protection layer 9 constitute a first disk substrate L0, and the second substrate 11, the second reflection layer 12, the second pigment recording layer 13, the inorganic protection layer 14, the transparent intermediate layer 8, and the protection layer 10 constitute a second disk substrate L1.

An incident laser beam enters the optical recording medium and a reflected laser beam goes out of the optical recording medium from the side of the first disk substrate L0 for recording and reproduction.

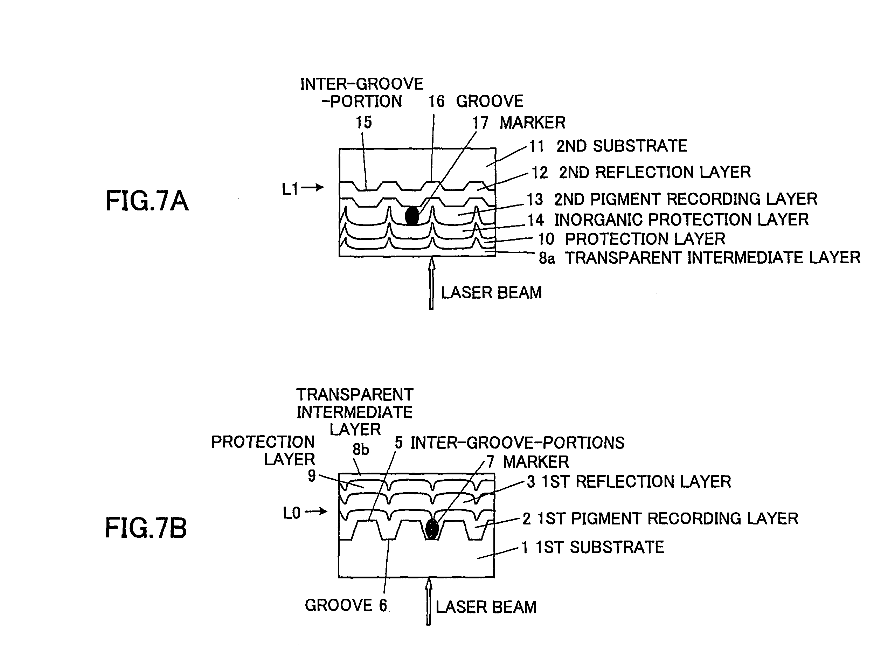

FIG. 7A and FIG. 7B are cross-sectional views schematically illustrating configurations of the second disk substrate L1 and the first disk substrate L0, respectively, of the one-side two-layer optical recording medium in FIG. 6.

In FIG. 7A, the second disk substrate L1 further includes inter-groove-portions 15, substrate grooves 16, and a marker 17 in the second pigment recording layer 13.

In FIG. 7B, the first disk substrate L0 further includes inter-groove-portions 5, substrate grooves 6, and a marker 7 in the first pigment recording layer 2.

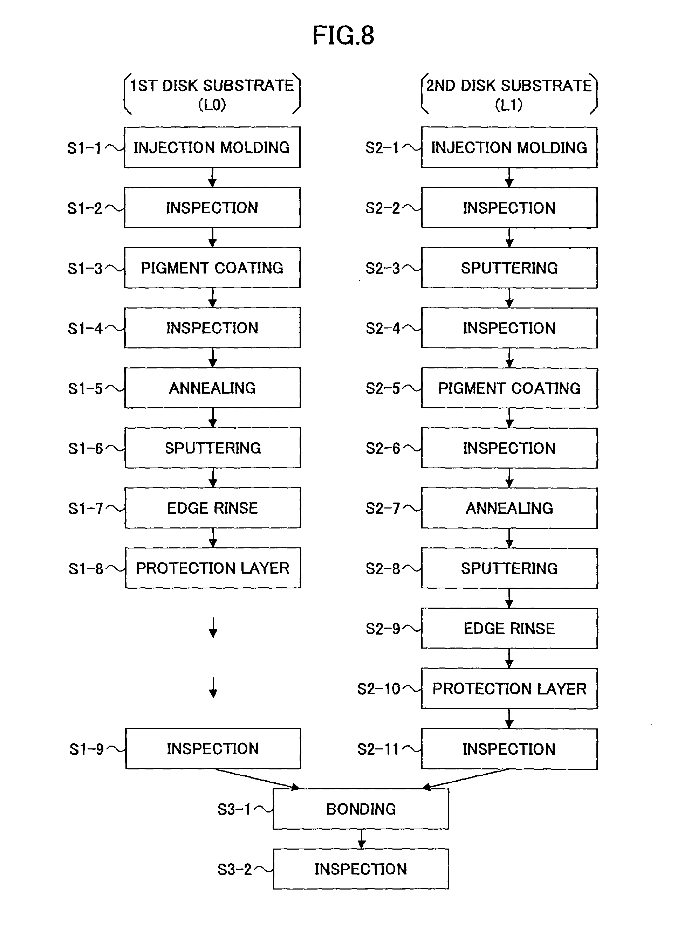

FIG. 8 is a flow chart illustrating a method of producing the one-side two-layer optical recording medium in FIG. 6, according to the second embodiment of the present invention, in which steps S1-1 through S1-9 illustrate fabrication of the first disk substrate L0, and steps S2-1 through S2-11 illustrate fabrication of the second disk substrate L1.

First, fabrication of the first disk substrate L0 is explained.

In step S1-1, the first substrate 1 having unevenness is formed by injection molding from a stamper, which has the corresponding unevenness. For example, the first substrate 1 is formed from a transparent material, and preferably, the first substrate 1 is formed from materials superior in optical properties, such as a small complex refractive index and low hydroscopicity, and carbonate is preferable from the view of formability, cost, shape stability, and so on. For example, thickness of the first substrate 1 is in the range from 560 - 600 µm, and it is desirable that the distribution of the substrate thickness be as narrow as possible in the in-plane direction.

In step S1-2, the obtained first substrate 1 is inspected with an online inspection device in respect of mechanical characteristics, optical characteristics, and shape (substrate thickness) characteristics. Certainly, this inspection can also be made offline.

In step S1-3, after the inspection, a coating of pigment is applied on the first substrate 1. In the first embodiment, considering productivity and production cost, the existing spincoat method is used for applying the pigment. By applying the pigment, the first pigment recording layer 2 is formed on the first substrate 1. It is desirable that the distribution of the thickness of the pigment film be as narrow as possible in the in-plane direction.

In step S1-4, after pigment coating, online defect inspection and film thickness inspection are made on the substrate structure under fabrication with an online inspection device. Certainly, this inspection can be performed offline.

In step S1-5, annealing is performed on the substrate structure under fabrication.

In step S1-6, a semi-transparent reflection layer acting as the first reflection layer 3 is deposited by sputtering.

In step S1-7, because the pigment recording medium adheres to the edge of the first disk substrate L0 under fabrication, the edge of the first disk substrate L0 under fabrication is rinsed by spincoat.

In step S1-8, by sputtering, the protection layer 9 is formed on the first reflection layer 3 made of a semi-transparent reflection layer.

In step S1-9, after sputtering, online quality examination is made on individual first disk substrate L0 with the online inspection device, and fabrication of the first disk substrate L0 is completed.

Next, fabrication of the second substrate L1 is explained.

In step S2-1, the second substrate 11 having unevenness is formed by injection molding from the stamper, which has the corresponding unevenness. The second substrate 11 is not required to be transparent, and it is not required that the second substrate 11 be formed from materials superior in optical characteristics and substrate thickness characteristics. Meanwhile, considering the relation with the first substrate 1, it is preferable that the second substrate 11 have rigidity and hydroscopicity matching with those of the first substrate 1, and similarly, carbonate is preferable from the point of view of formability, cost, shape stability, and so on.

In step S2-2, the obtained second substrate 11 is inspected with an online inspection device in respect of mechanical characteristics, and others. This inspection can also be made offline.

In step S2-3, the second reflection layer 12 is deposited by sputtering.

In step S2-4, after sputtering, online defect inspection and film thickness inspection are made on the substrate structure under fabrication with an online inspection device. Certainly, this inspection can be performed offline.

In step S2-5, after the inspection, a coating of pigment is applied on the second substrate 11 by spincoat, thereby forming the second pigment recording layer 13 on the second substrate 11.

In step S2-6, after pigment coating, online defect inspection and film thickness inspection are made on the substrate structure under fabrication with an online inspection device. Certainly, this inspection can be performed offline.

In step S2-7, annealing is performed on the substrate structure under fabrication.

In step S2-8, the inorganic protection layer 14 is deposited by sputtering.

In step S2-9, because the pigment recording medium adheres to the edge of the second disk substrate L1 under fabrication, the edge of the second disk substrate L1 under fabrication is rinsed by spincoat.

In step S2-10, after rinsing the edge, the protection layer 10 is formed on the inorganic protection layer 14 by spincoat.

In step S2-11, after sputtering, online quality examination of individual second disk substrate L1 is made with the online inspection device, and fabrication of the second disk substrate L1 is completed.

In step S3-1, the first disk substrate L0 and the second disk substrate L1 are bonded with the first substrate 1 and the second substrate 11 being on outer sides, respectively. When the first disk substrate L0 and the second disk substrate L1 are bonded, the transparent intermediate layer 8 (8a, 8b) is obtained.

In step S3-2, after bonding, online quality examination is made on the obtained one-side two-layer optical recording medium with the online inspection device, and fabrication of the one-side two-layer optical recording medium is completed.

According to the above embodiments, because the protection layer 9 is formed on the first reflection layer 3 made of a semi-transparent reflection layer, it is possible to prevent corrosion of the semi-transparent reflection layer. Further, because the protection layer 10 is formed on the inorganic protection layer 14, it is possible to prevent cracks in the inorganic protection layer 14, hence, improving durability of the inorganic protection layer 14 and facilitating management up to the bonding.

While the present invention is described with reference to specific embodiments chosen for purpose of illustration, it should be apparent that the invention is not limited to these embodiments, but numerous modifications could be made thereto by those skilled in the art without departing from the basic concept and scope of the invention.

For example, depending on design and specification, the protection layers 9, 10 may be either a semi-transparent reflection layer or an inorganic protection layer.

In addition, the method of producing the one-side two-layer optical recording medium in FIG. 6 according to the second embodiment of the present invention can also be executed by the devices shown in FIG. 4 and FIG. 5. For this purpose, it is needed to install a device for forming the protection layers 9, 10 in post-treatments of the edge rinse process after processing of the sputter devices 27 and 28 in the production lines.

The production lines can be appropriately modified depending on the installation space or other conditions, and are not limited to the configurations of the first and the second embodiments.

According to the present invention, because the first recording layer and the second recording layer are not stacked, as in the related art, it is not necessary to form an intermediate layer and grooves with a soft stamper, and producing a one-side two-layer optical recording medium that allows an increase of yield without modifying existing production equipment is enabled.

In addition, it is possible to prevent corrosion or cracks, for example, in the reflection layer and the inorganic protection layer before bonding the first recording layer and the second recording layer.

The present invention is applicable to an optical recording medium including a first recording layer and a second recording layer and capable of recording and reproduction by incidence and reflection of a light beam from one side of the optical recording medium. For example, the present invention is applicable to optical recording disks like DVD+R/RW, DVD-R/RW, and DVD-RAM. Particularly, the present invention is effective for producing a one-side two-layer optical recording medium requiring high yield but without modifying existing production equipments.

This patent application is based on Japanese Priority Patent Applications No. 2004-084750 filed on March 23, 2004, and No. 2004-298728 filed on October 13, 2004, the entire contents of which are hereby incorporated by reference.

## Claims

1. A method of producing an optical recording medium that includes a first recording layer and a second recording layer and is capable of recording and reproduction by incidence and reflection of a light beam from one side of the optical recording medium, said method comprising the steps of:
forming the first recording layer on a first substrate by performing pigment coating and sputtering sequentially;
forming the second recording layer on a second substrate by performing a first sputtering, pigment coating, and a second sputtering sequentially; and
bonding the first recording layer and the second recording layer with the first substrate and the second substrate being on outer sides.

2. A method as claimed in claim 1, wherein
in the step of forming the first recording layer, a first reflection layer of the optical recording medium is formed by said sputtering; and
in the step of forming the second recording layer, a second reflection layer of the optical recording medium is formed by the first sputtering, and an inorganic protection layer of the optical recording medium is formed by the second sputtering.

3. A method as claimed in claim 1, wherein
in the step of forming the first recording layer, annealing is performed after said pigment coating; and
in the step of forming the second recording layer, annealing is performed after said pigment coating.

4. A method as claimed in claim 1, wherein
in the step of forming the first recording layer, edge rinse is performed after said sputtering; and
in the step of forming the second recording layer, edge rinse is performed after the second sputtering.

5. A method as claimed in claim 4, wherein
after said edge rinse in at least one of the step of forming the first recording layer and the step of forming the second recording layer, a protection layer is formed.

6. A method as claimed in claim 1, wherein examination is performed after the step of forming the first recording layer and the step of forming the second recording layer.

7. A device for producing an optical recording medium that includes a first recording layer and a second recording layer and is capable of recording and reproduction by incidence and reflection of a light beam from one side of the optical recording medium, said device comprising:
a first production line configured to form the first recording layer on a first substrate by performing pigment coating and sputtering sequentially;
a second production line configured to form the second recording layer on a second substrate by performing a first sputtering, pigment coating, and a second sputtering sequentially; and
a third production line configured to bond the first recording layer and the second recording layer with the first substrate and the second substrate being on outer sides.

8. A device as claimed in claim 7, wherein
the first production line forms a first reflection layer of the optical recording medium by said sputtering; and
the second production line forms a second reflection layer of the optical recording medium by the first sputtering, and forms an inorganic protection layer of the optical recording medium by said second sputtering.

9. A device as claimed in claim 7, further comprising:
an annealing device to perform annealing after said pigment coatings when forming the first recording layer and the second recording layer.

10. A device as claimed in claim 7, further comprising:
an edge rinse device to perform edge rinse after said sputtering when forming the first recording layer, and to perform edge rinse after the second sputtering when forming the second recording layer.

11. A device as claimed in claim 10, further comprising:
a protection layer formation device to form a protection layer after said edge rinse when forming at least one of the first recording layer and the second recording layer.

12. A device as claimed in claim 7, further comprising:
an examination device to examine the first recording layer and the second recording layer.
